# EUROPÄISCHE PATENTSCHRIFT

(11) **EP 3 529 125 B1**
(45) Veröffentlichungstag und Bekanntmachung des Hinweises auf die Patenterteilung: **30.12.2020**
(21) Anmeldenummer: 17808018.0
(22) Anmeldetag: 14.11.2017
(51) Int. Cl.: B61L 25/08, B61L 15/00, B61L 21/06, G06K 9/00, G06K 9/46, G06K 9/48

(54) **TECHNISCHE ANLAGE, VERFAHREN ZU DEREN BETRIEB SOWIE PROZESSZUSTANDSERKENNUNGSEINRICHTUNG FÜR EINE TECHNISCHE ANLAGE**
TECHNICAL SYSTEM, METHOD FOR THE OPERATION THEREOF, AND PROCESS STATE DETECTION DEVICE FOR A TECHNICAL SYSTEM
INSTALLATION TECHNIQUE, PROCÉDÉ POUR SON FONCTIONNEMENT ET DISPOSITIF DE DÉTECTION D'ÉTAT DE PROCESSUS POUR UNE INSTALLATION TECHNIQUE

(30) Priorität: 14.12.2016 DE 102016224967
(43) Veröffentlichungstag der Anmeldung: 28.08.2019
(73) Patentinhaber: Siemens Mobility GmbH, 81739 München (DE)
(72) Erfinder: SCHAAF, Michael, 22303 Hamburg (DE)
(86) Internationale Anmeldenummer: PCT/EP2017/079106
(87) Internationale Veröffentlichungsnummer: WO 2018/108406

(56) Entgegenhaltungen:
- EP-A1- 3 040 862
- DE-A1-102012 221 714
- US-A- 5 222 158
- US-A1- 2007 025 617
- US-A1- 2009 274 369

## Beschreibung

Die Erfindung bezieht sich unter anderem auf ein Verfahren zum Betreiben einer technischen Anlage, die eine Anzeigeeinrichtung umfasst, wobei bei dem Verfahren auf der Anzeigeeinrichtung ein Prozessabbild der technischen Anlage angezeigt wird.

Aus der deutschen Offenlegungsschrift DE 10 2012 221 714 A1 ist ein solches Verfahren bekannt. Das Verfahren dient zur Fehleroffenbarung bei einem Stellwerksrechnersystem und basiert auf der Analyse von Pixeldaten eines Prozessabbilds.

Der Erfindung liegt die Aufgabe zugrunde, ein Verfahren der eingangs angegebenen Art hinsichtlich der Bildauswertung bzw. Bilderkennung zu verbessern.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass Pixelinformationen des Prozessabbilds oder Pixelinformationen von einem oder mehreren aus dem Prozessabbild gewonnenen Hilfsbildern einem Vektorisierungsverfahren unter Bildung einer vektorbasierten Bildbeschreibung oder vektorbasierter Hilfsbildbeschreibungen unterzogen werden und die vektorbasierte Bildbeschreibung bzw. die vektorbasierten Hilfsbildbeschreibungen jeweils einem Mustererkennungsverfahren unter Bildung von Zustandsdaten unterzogen werden, die den Betriebszustand der technischen Anlage oder von Anlagenkomponenten der technischen Anlage beschreiben.

Ein wesentlicher Vorteil des erfindungsgemäßen Verfahrens besteht darin, dass die Bildung von Zustandsdaten erfindungsgemäß auf einer vektorbasierten Bildbeschreibung bzw. vektorbasierten Bilddaten basiert, also nicht auf rein pixelbasierten Bilddaten wie bei dem eingangs erwähnten vorbekannten Verfahren. Aufgrund der erfindungsgemäß vorgesehenen Vektorisierung der Bilddaten und der Bildung vektorbasierter Bildbeschreibungen lassen sich die Zustandsdaten der technischen Anlage aus dem Prozessabbild zuverlässiger und fehlerfreier als bei dem vorbekannten Verfahren bestimmen. So lassen sich durch die erfindungsgemäß vorgesehene Vektorisierung beispielsweise Probleme im Falle eines etwaigen Variierens des Skalierungsfaktors der zu erkennenden Bildelemente, insbesondere bei frei skalierbaren Grafiken, in sehr einfacher Weise in den Griff bekommen, weil Skalierungen aus vektorbasierten Bildbeschreibungen sehr einfach auslesbar sind.

Weitere wesentliche Vorteile des erfindungsgemäßen Verfahrens, insbesondere der erfindungsgemäß vorgesehenen Vektorisierung, bestehen darin, dass Objekte auch in gedrehter und/oder gespiegelter Lage zuverlässig erkannt werden können. Außerdem ist die zu bearbeitende Bilddatenmenge nach der Vektorisierung deutlich kleiner als die auf Bildpixeln beruhende Datenmenge vor der Vektorisierung, wodurch Speicherplatz gespart und die nötige Rechenzeit bei der Bildauswertung reduziert wird.

Das Verfahren lässt sich beispielsweise bei einer Eisenbahnanlage durchführen. In diesem Falle wird es als vorteilhaft angesehen, wenn auf der Anzeigeeinrichtung ein eisenbahntechnisches Prozessabbild der Eisenbahnanlage, insbesondere ein den Signal- und/oder Weichen- und/oder Belegungszustand eines Gleisabschnitts der Eisenbahnanlage anzeigendes Gleisanlagenzustandsbild, angezeigt wird.

Mit Blick auf eine fehlerfreie oder zumindest sehr fehlerarme Bildung der Zustandsdaten wird es als vorteilhaft angesehen, wenn - im Rahmen eines Hilfsbilderzeugungsverfahrens - mindestens ein Hilfsbild erzeugt wird, indem allen denjenigen Pixeln des Prozessabbilds, die eine dem Hilfsbild individuell zugeordnete Farbe aufweisen, eine vorgegebene erste Hilfspixelfarbe zugeordnet wird und allen übrigen Pixeln des Prozessabbilds eine zweite, von der ersten Hilfspixelfarbe unterschiedliche Hilfspixelfarbe zugeordnet wird. Bei der letztgenannten Verfahrensvariante erfolgt die Auswertung der Bilder also farbabhängig und die Vektorisierung basiert auf den farbabhängig gebildeten bzw. hinsichtlich der Farbe vorgefilterten Hilfsbildern. Durch das Vorfiltern nach Farben lassen sich im Prozessabbild beispielsweise durch Antialiasingalgorithmen erzeugte unscharfe und in der Regel auf Mischfarben basierende Bildpunkte in vorteilhafter Weise ausblenden.

Als besonders vorteilhaft wird es angesehen, wenn ein mindestens zwei Farben aufweisender Farbsatz vorgegeben ist und für jede der Farben des Farbsatzes jeweils ein Hilfsbild erstellt wird, indem allen denjenigen Pixeln des Prozessabbilds, die die dem jeweiligen Hilfsbild individuell zugeordnete Farbe aufweisen, die erste Hilfspixelfarbe zugeordnet wird und allen übrigen Pixeln des Prozessabbilds die zweite Hilfspixelfarbe.

Der vorgegebene Farbsatz enthält vorzugsweise alle - und besonders bevorzugt ausschließlich nur - diejenigen Farben, die für die im Prozessabbild darzustellenden Anlagenkomponenten der technischen Anlage bei der bestimmungsgemäßen bzw. fehlerfreien Erzeugung des Prozessabbilds verwendet werden bzw. verwendet werden sollen. Bei dieser Vorgehensweise können Farbdarstellungsfehler im Prozessabbild erkannt werden, wenn nämlich Anlagenkomponenten mit Farben, die nicht im Farbsatz enthalten sind, dargestellt werden, weil diese in den Hilfsbildern fehlen werden. Darüber hinaus werden, wie bereits erwähnt, beispielsweise durch Antialiasingalgorithmen erzeugte und auf Mischfarben basierende Bildpunkte in den Hilfsbildern fehlen bzw. aus diesen herausgefiltert, wenn - was die Regel ist - die Mischfarben in dem Farbsatz nicht vorgesehen sind. Bei der Wahl der Hilfspixelfarben wird es als vorteilhaft angesehen, wenn die erste Hilfspixelfarbe schwarz und die zweite Hilfspixelfarbe weiß ist und das oder die Hilfsbilder Schwarz-Weiß-Bilder sind.

Eine besonders fehlerarme Erzeugung von Zustandsdaten lässt sich erreichen, wenn für jede Farbe des Farbsatzes und für jedes Hilfsbild jeweils eine vektorbasierte Hilfsbildbeschreibung erzeugt wird und die Bildung der Zustandsdaten, die den Betriebszustand der technischen Anlage oder von Anlagenkomponenten der Anlage beschreiben, auf der Basis der vektorbasierten Hilfsbildbeschreibungen erfolgt.

Darüber hinaus ist es möglich, die gebildeten Zustandsdaten für einen Vergleich mit aus anderer Quelle vorliegenden Daten eines Eingangszustandsdatensatzes zu vergleichen. Demgemäß ist bei einer vorteilhaften Ausgestaltung des Verfahrens vorgesehen, dass das Prozessabbild der technischen Anlage auf der Basis von einem Eingangszustandsdatensatz erzeugt wird, die auf der Basis des Mustererkennungsverfahrens gebildeten Zustandsdaten mit den Daten des Eingangszustandsdatensatzes verglichen werden und ein Warnsignal erzeugt wird, wenn die Zustandsdaten von den Daten des Eingangszustandsdatensatzes abweichen oder über ein vorgegebenes Maß voneinander abweichen.

Die Erfindung bezieht sich darüber hinaus auf eine technische Anlage mit einer Anzeigeeinrichtung, auf der ein Prozessabbild der technischen Anlage anzeigbar ist.

Bezüglich einer solchen technischen Anlage ist erfindungsgemäß vorgesehen, dass die technische Anlage eine Prozesszustandserkennungseinrichtung aufweist, die derart ausgestaltet ist, dass sie Pixelinformationen des Prozessabbilds oder Pixelinformationen von einem oder mehreren aus dem Prozessabbild gewonnenen Hilfsbildern einem Vektorisierungsverfahren unter Bildung einer vektorbasierten Bildbeschreibung oder vektorbasierter Hilfsbildbeschreibungen unterzieht und mit der vektorbasierten Bildbeschreibung oder den vektorbasierten Hilfsbildbeschreibungen unter Heranziehung eines Mustererkennungsverfahrens Zustandsdaten erzeugt, die den Betriebszustand der technischen Anlage oder von Anlagenkomponenten der Anlage beschreiben.

Bezüglich der Vorteile der technischen Anlage sei auf die obigen Ausführungen im Zusammenhang mit dem erfindungsgemäßen Verfahren verwiesen.

Besonders vorteilhaft ist es, wenn die technische Anlage eine Eisenbahnanlage ist und auf der Anzeigeeinrichtung ein eisenbahntechnisches Prozessabbild, insbesondere ein den Signal- und/oder Weichen- und/oder Belegungszustand eines Gleisabschnitts der Eisenbahnanlage anzeigendes Gleisanlagenzustandsbild, angezeigt wird. Die Anlagenkomponenten der Anlage werden in diesem Falle also vorzugsweise durch Signale, Weichen und/oder Gleisabschnitte der Eisenbahnanlage gebildet.

Die Prozesszustandserkennungseinrichtung weist vorzugsweise eine Recheneinrichtung auf, die derart programmiert ist, dass sie das oben beschriebene Verfahren ausführen kann.

Die Prozesszustandserkennungseinrichtung kann beispielsweise einen Bestandteil eines Eisenbahnstellwerks bilden. Alternativ ist es möglich, dass die Prozesszustandserkennungseinrichtung einen Bestandteil einer Führerstandsanzeige eines Schienenfahrzeugs bildet.

Mit Blick auf die bereits erwähnte Erzeugung von Warnsignalen wird es als vorteilhaft angesehen, wenn bei der technischen Anlage vorgesehen ist, dass die Anlage eine erste Recheneinheit aufweist, die das Prozessabbild der technischen Anlage auf der Basis eines Eingangszustandsdatensatzes erzeugt, die Anlage eine zweite Recheneinheit aufweist, die die Pixelinformationen des Prozessabbilds oder die Pixelinformationen von einem oder mehreren aus dem Prozessabbild gewonnenen Hilfsbildern dem Vektorisierungsverfahren unter Bildung der vektorbasierten Bildbeschreibung oder vektorbasierter Hilfsbildbeschreibungen unterzieht und auf der Basis des Mustererkennungsverfahrens die Zustandsdaten bildet, und die Anlage eine Vergleichseinrichtung aufweist, die Daten des Eingangszustandsdatensatzes mit den von der zweiten Recheneinheit gebildeten Zustandsdaten vergleicht und ein Warnsignal erzeugt, wenn die Zustandsdaten von den Daten des Eingangszustandsdatensatzes abweichen oder über ein vorgegebenes Maß voneinander abweichen.

Die Erfindung bezieht sich darüber hinaus auf eine Prozesszustandserkennungseinrichtung für eine technische Anlage, wie sie oben beschrieben worden ist. Bezüglich der Ausgestaltung der Prozesszustandserkennungseinrichtung ist erfindungsgemäß vorgesehen, dass diese eine Recheneinrichtung aufweist, die derart programmiert ist, dass sie das oben beschriebene Verfahren durchführen kann.

Die Prozesszustandserkennungseinrichtung weist vorzugsweise einen mit der Recheneinrichtung in Verbindung stehenden Speicher auf, in dem ein Betriebsprogramm gespeichert ist, das bei Ausführung durch die Recheneinrichtung die Arbeitsweise der Recheneinrichtung sowie damit insgesamt die Arbeitsweise der Prozesszustandserkennungseinrichtung festlegt.

Die Erfindung wird nachfolgend anhand von Ausführungsbeispielen näher erläutert; dabei zeigen beispielhaft
- Figur 1: anhand eines Blockschaltbilds ein Ausführungsbeispiel für das erfindungsgemäße Verfahren,
- Figur 2: ein Ausführungsbeispiel für ein Prozessabbild, das eine Eisenbahnanlage zeigt und von dem Verfahren gemäß Figur 1 verarbeitet werden kann, wobei das eigentlich farbige Prozessabbild hier aus formalen Gründen lediglich mit schwarzen Linien dargestellt ist,
- Figur 3: Hilfsbilder, die anhand eines fünf Farben aufweisenden Farbsatzes aus dem Prozessabbild gemäß Figur 2 von dem Verfahren gemäß Figur 1 gewonnen worden sind,
- Figur 4: ein Ausführungsbeispiel für ein Vektorisierungsverfahren, das im Rahmen des Verfahrens gemäß Figur 1 ausgeführt wird, und zwar anhand eines Abschnitts eines Hilfsbilds gemäß Figur 3,
- Figur 5: ein Ausführungsbeispiel für eine Prozesszustandserkennungseinrichtung, die zum Durchführen der Verfahrensschritte gemäß Figur 1 geeignet ist, und
- Figur 6: ein Ausführungsbeispiel für eine technische Anlage, die eine Vielzahl an Anlagenkomponenten, zwei Recheneinheiten, eine Vergleichseinrichtung sowie eine Anzeigeeinrichtung umfasst.

In den Figuren werden der Übersicht halber für identische oder vergleichbare Komponenten stets dieselben Bezugszeichen verwendet.

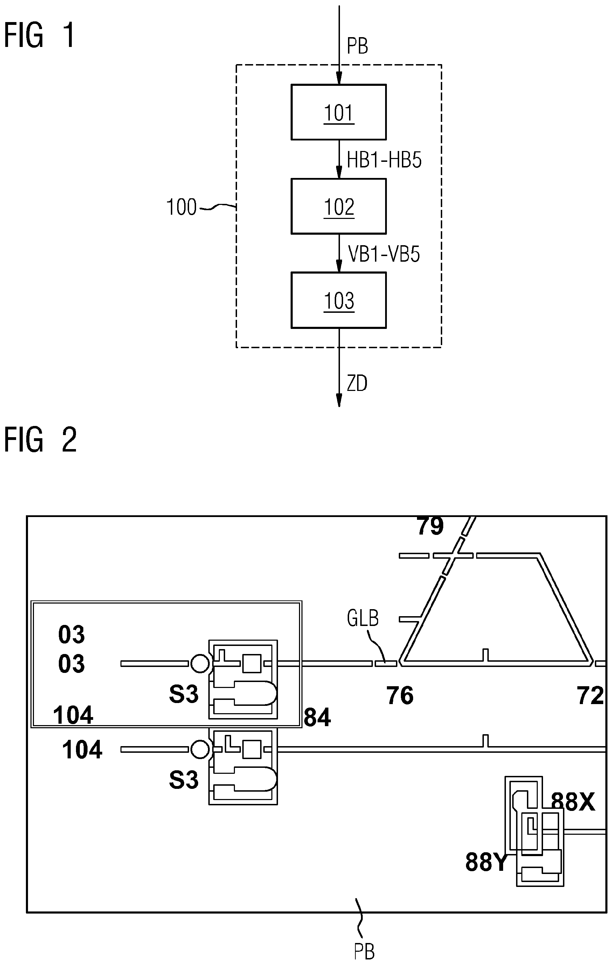

Die Figur 1 zeigt anhand eines Blockschaltbilds ein Ausführungsbeispiel für das erfindungsgemäße Verfahren.

In einem Hilfsbilderzeugungsverfahren 101 wird ein eingangsseitig eingespeistes Prozessabbild PB verarbeitet. Das Prozessabbild PB zeigt eine technische Anlage, bei der es sich beispielsweise um eine Eisenbahnanlage handeln kann. Konkret kann das Prozessabbild PB den Signal- und/oder Weichen- und/oder Belegungszustand eines Gleisabschnitts der Eisenbahnanlage anzeigen.

Das Hilfsbilderzeugungsverfahren 101 gemäß Figur 1 basiert auf einem vorgegebenen Farbsatz, der beispielsweise fünf Farben umfasst. Bei den fünf Farben handelt es sich beispielsweise um Rot, Gelb, Grün, Lila und Weiß.

Im Rahmen des Hilfsbilderzeugungsverfahrens 101 werden fünf Hilfsbilder HB1, HB2, HB3, HB4 und HB5 erzeugt, indem allen denjenigen Pixeln des Prozessabbilds PB, die eine dem jeweiligen Hilfsbild HB1 bis HB5 individuell zugeordnete Farbe aufweisen, also beispielsweise Rot im Falle des Hilfsbilds HB1, Gelb im Falle des Hilfsbilds HB2, Grün im Falle des Hilfsbilds HB3, Lila im Falle des Hilfsbilds HB4 und Weiß im Falle des Hilfsbilds HB5, eine vorgegebene erste Hilfspixelfarbe zugeordnet wird. Bei der ersten Hilfspixelfarbe kann es sich beispielsweise um Schwarz handeln.

Allen übrigen Pixeln des Prozessabbilds PB wird eine zweite, von der ersten Hilfspixelfarbe unterschiedliche Hilfspixelfarbe zugeordnet. Bei der zweiten Hilfspixelfarbe kann es sich beispielsweise um Weiß handeln.

Mit anderen Worten werden aus dem Prozessabbild PB fünf Hilfsbilder HB1 bis HB5 gebildet, bei denen es sich jeweils um Schwarz-Weiß-Bilder handelt, wobei jedes der Schwarz-Weiß-Bilder jeweils die Farbinformation der dem jeweiligen Hilfsbild HB1 bis HB5 zugeordneten Farbe darstellt.

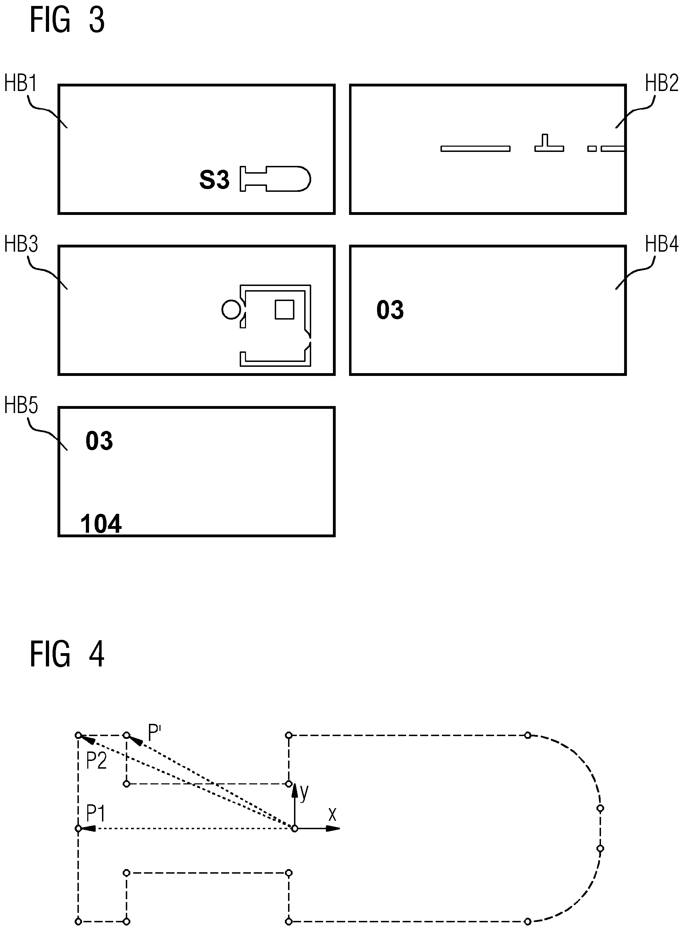

Die Arbeitsweise des Hilfsbilderzeugungsverfahrens 101 ist beispielhaft in den Figuren 2 und 3 näher dargestellt.

Die Figur 2 zeigt ein Ausführungsbeispiel für ein Prozessabbild PB, das einen Gleisabschnitt einer Eisenbahnanlage darstellt. Bei dem Prozessabbild PB handelt es sich eigentlich um ein farbiges Bild, das hier in vereinfachter Form mit schwarzen Linien wiedergegeben ist. Man erkennt in der Figur zwei Signale, beispielsweise die Signale S3 und S4, Gleise sowie Informationen, die den Belegungszustand der Gleise anzeigen. So ist im Prozessabbild PB beispielsweise ein belegtes Gleis mit dem Bezugszeichen GLB gekennzeichnet.

Die Figur 3 zeigt die aus dem Prozessabbild PB im Rahmen des Hilfsbilderzeugungsverfahrens 101 gemäß Figur 1 abgeleiteten Hilfsbilder HB1 bis HB5. Das Hilfsbild HB1 enthält lediglich die Bildinformationen, die im Prozessabbild PB in rot dargestellt sind (rote Farbe nicht sichtbar in Figur 2 aus o. g. Gründen). In entsprechender Weise zeigen die Hilfsbilder HB2 bis HB5 lediglich die Bildanteile des Prozessabbilds PB, die in den Farben Gelb, Grün, Lila bzw. Weiß dargestellt sind (Farben nicht sichtbar in Figur 2 aus o. g. Gründen).

Wieder zurückkommend auf Figur 1 lässt sich erkennen, dass die Hilfsbilder HB1 bis HB5 in einem Vektorisierungsverfahren 102 weiter verarbeitet werden. Im Rahmen des Vektorisierungsverfahrens 102 werden mit den Hilfsbildern HB1 bis HB5 vektorbasierte Hilfsbildbeschreibungen VB1 bis VB5 erzeugt, indem die Pixelinformationen der Hilfsbilder HB1 bis HB5 jeweils dem Vektorisierungsverfahren unter Bildung der vektorbasierten Bildbeschreibungen VB1 bis VB5 unterzogen werden.

Ein Ausführungsbeispiel für die Durchführung des Vektorisierungsverfahrens 102 ist in der Figur 4 dargestellt. Die Figur 4 zeigt das Bildsymbol des Signals S3 des Prozessabbilds PB gemäß Figur 2 bzw. dem Hilfsbild HB1 in Figur 3. Es lässt sich erkennen, dass im Rahmen des Vektorisierungsverfahrens 102 rechnergestützt Punkte P1, P2, ... P' im Hilfsbild erkannt werden können, die unter Heranziehung von vorgegebenen Vektorgrafikelementen, wie beispielsweise geraden Linien (nachfolgende Vektorbeschreibung beispielsweise in Form eines "LineTo"-Befehls) oder gekrümmten Kurvenabschnitten ("Vektorbeschreibung beispielsweise in Form eines "CurveTo"-Befehls), in der x-y-Ebene verbunden werden; es lässt sich in dieser Weise eine vektorbasierte Bildbeschreibung für das Signal erzeugen. Die Bildung von Vektordaten aus pixelbasierten Bildern ist für sich in der Technik bereits bekannt; für das hier beschriebene Vektorisierungsverfahren können beispielsweise bekannte Algorithmen wie der Polygon-Trace ("potrace") -Algorithmus oder der "autotrace"-Algorithmus eingesetzt werden.

Wieder zurückkommend auf Figur 1 lässt sich erkennen, dass die vektorbasierten Hilfsbildbeschreibungen VB1 bis VB5 einem Mustererkennungsverfahren 103 unterzogen werden. Im Rahmen des Mustererkennungsverfahrens 103 werden Zustandsdaten ZD erzeugt, die den Betriebszustand der technischen Anlage, hier also der Eisenbahnanlage gemäß dem Prozessabbild PB in Figur 2, beschreiben. Die Erzeugung der Zustandsdaten ZD erfolgt dabei auf der Basis der vektorbasierten Bildbeschreibungen VB1 bis VB5.

Das in Figur 1 gezeigte Hilfsbilderzeugungsverfahren 101, das Vektorisierungsverfahren 102 sowie das Mustererkennungsverfahren 103 können beispielsweise in einer Prozesszustandserkennungseinrichtung durchgeführt werden, die in der Figur 1 mit dem Bezugszeichen 100 markiert ist.

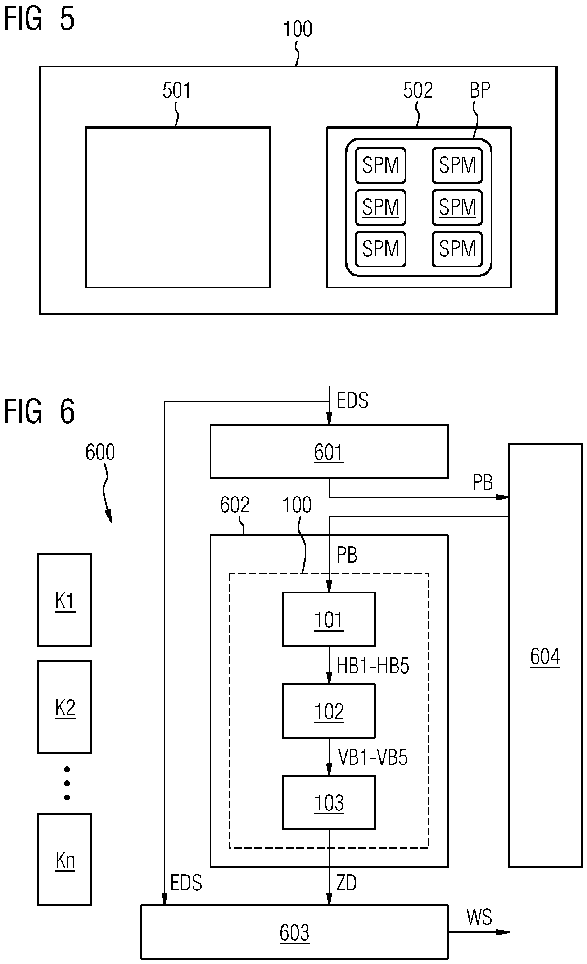

Die Figur 5 zeigt ein Ausführungsbeispiel für eine Prozesszustandserkennungseinrichtung 100, die zur Durchführung der Verfahrensschritte 101, 102 und 103 gemäß Figur 1 geeignet ist.

Die Prozesszustandserkennungseinrichtung 100 gemäß Figur 5 weist eine Recheneinrichtung 501 sowie einen mit dieser in Verbindung stehenden Speicher 502 auf. In dem Speicher 502 ist ein Betriebsprogramm BP gespeichert, das bei Ausführung durch die Recheneinrichtung 501 die Arbeitsweise der Recheneinrichtung 501 sowie damit insgesamt die Arbeitsweise der Prozesszustandserkennungseinrichtung 100 festlegt.

Das Betriebsprogramm BP kann eine Vielzahl an Speicherprogrammmodulen SPM aufweisen, die bei Ausführung durch die Recheneinrichtung 501 das in Figur 1 gezeigten Verfahren, also das Hilfsbilderzeugungsverfahren 101, das Vektorisierungsverfahren 102 bzw. das Mustererkennungsverfahren 103 durchführen, wie dies im Zusammenhang mit der Figur 1 oben im Detail erläutert worden ist.

Die Figur 6 zeigt ein Ausführungsbeispiel für eine technische Anlage 600, die eine Vielzahl an Anlagenkomponenten K1, K2, ..., Kn aufweist. Bei der technischen Anlage 600 handelt es sich vorzugsweise um eine Eisenbahnanlage; die Anlagenkomponenten K1, K2, ..., Kn sind somit beispielsweise Signale, Weichen, und/oder Gleisabschnitte.

Darüber hinaus umfasst die technische Anlage 600 eine erste Recheneinheit 601, eine zweite Recheneinheit 602, eine Vergleichseinrichtung 603 sowie eine Anzeigeeinrichtung 604.

Die erste Recheneinheit 601 dient dazu, einen Eingangszustandsdatensatz EDS, der den Zustand einer technischen Anlage 600, hier also der Eisenbahnanlage, anzeigt, zu verarbeiten und ein Prozessabbild PB zu erzeugen, das den technischen Zustand der technischen Anlage 600 visualisiert. Das Prozessabbild PB wird vorzugsweise auf einer Anzeigeeinrichtung 604 angezeigt.

Die zweite Recheneinheit 602 dient dazu, das Prozessabbild PB auszuwerten, vorzugsweise nach einem Auslesen aus der Anzeigeeinrichtung 604, und Zustandsdaten ZD zu erzeugen, die den Betriebszustand der technischen Anlage 600 beschreiben. Die zweite Recheneinheit 602 kann beispielsweise so arbeiten, wie dies im Zusammenhang mit der Figur 1 oben erläutert worden ist: Beispielsweise kann die zweite Recheneinheit 602 das Hilfsbilderzeugungsverfahren 101, das Vektorisierungsverfahren 102 sowie das Mustererkennungsverfahren 103 durchführen.

Die zweite Recheneinheit 602 kann durch die Prozesszustandserkennungseinrichtung 100 gemäß den Figuren 1 und 5 gebildet sein oder diese zumindest auch umfassen.

Die Zustandsdaten ZD der zweiten Recheneinheit 602 werden von der Vergleichseinrichtung 603 mit dem Eingangszustandsdatensatz EDS verglichen. Stellt die Vergleichseinrichtung 603 fest, dass die Zustandsdaten ZD von den Daten des Eingangszustandsdatensatzes EDS abweichen oder über ein vorgegebenes Maß voneinander abweichen, so erzeugt sie ausgangsseitig ein Warnsignal WS, das eben diese Abweichung signalisiert. Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann im Rahmen der Erfindung wie beansprucht hieraus abgeleitet werden.

## Patentansprüche

1. Verfahren zum Betreiben einer technischen Anlage (600), die eine Anzeigeeinrichtung (604) umfasst, wobei bei dem Verfahren auf der Anzeigeeinrichtung (604) ein Prozessabbild (PB) der technischen Anlage (600) angezeigt wird,
**dadurch gekennzeichnet, dass**
- Pixelinformationen des Prozessabbilds (PB) oder Pixelinformationen von einem oder mehreren aus dem Prozessabbild (PB) gewonnenen Hilfsbildern (HB1-HB5) einem Vektorisierungsverfahren (102) unter Bildung einer vektorbasierten Bildbeschreibung oder vektorbasierter Hilfsbildbeschreibungen (VB1-VB5) unterzogen werden und
- die vektorbasierte Bildbeschreibung bzw. die vektorbasierten Hilfsbildbeschreibungen (VB1-VB5) jeweils einem Mustererkennungsverfahren (103) unter Bildung von Zustandsdaten (ZD) unterzogen werden, die den Betriebszustand der technischen Anlage (600) oder von Anlagenkomponenten (K1-Kn) der technischen Anlage (600) beschreiben.

2. Verfahren nach Anspruch 1,
**dadurch gekennzeichnet, dass**
- die technische Anlage (600) eine Eisenbahnanlage ist und
- auf der Anzeigeeinrichtung (604) ein eisenbahntechnisches Prozessabbild (PB) der Eisenbahnanlage, insbesondere ein den Signal- und/oder Weichen- und/oder Belegungszustand eines Gleisabschnitts der Eisenbahnanlage anzeigendes Gleisanlagenzustandsbild, angezeigt wird.

3. Verfahren nach einem der voranstehenden Ansprüche,
**dadurch gekennzeichnet, dass** mindestens ein Hilfsbild (HB1-HB5) erzeugt wird, indem
- allen denjenigen Pixeln des Prozessabbilds (PB), die eine dem Hilfsbild (HB1-HB5) individuell zugeordnete Farbe aufweisen, eine vorgegebene erste Hilfspixelfarbe zugeordnet wird und
- allen übrigen Pixeln des Prozessabbilds (PB) eine zweite, von der ersten Hilfspixelfarbe unterschiedliche Hilfspixelfarbe zugeordnet wird.

4. Verfahren nach Anspruch 3,
**dadurch gekennzeichnet, dass**
- ein mindestens zwei Farben aufweisender Farbsatz vorgegeben ist und für jede der Farben des Farbsatzes jeweils ein Hilfsbild (HB1-HB5) erstellt wird,
- indem allen denjenigen Pixeln des Prozessabbilds (PB), die die dem jeweiligen Hilfsbild (HB1-HB5) individuell zugeordnete Farbe aufweisen, die erste Hilfspixelfarbe zugeordnet wird und allen übrigen Pixeln des Prozessabbilds (PB) die zweite Hilfspixelfarbe.

5. Verfahren nach einem der voranstehenden Ansprüche 2 bis 4, **dadurch gekennzeichnet, dass**
die erste Hilfspixelfarbe schwarz und die zweite Hilfspixelfarbe weiß ist und das oder die Hilfsbilder (HB1-HB5) Schwarz-Weiß-Bilder sind.

6. Verfahren nach einem der voranstehenden Ansprüche 2 bis 4, **dadurch gekennzeichnet, dass**
- für jede Farbe des Farbsatzes und für jedes Hilfsbild (HB1-HB5) jeweils eine vektorbasierte Hilfsbildbeschreibung (VB1-VB5) erzeugt wird und
- die Bildung der Zustandsdaten (ZD), die den Betriebszustand der technischen Anlage (600) oder von Anlagenkomponenten (K1-Kn) der Anlage (600) beschreiben, auf der Basis der vektorbasierten Hilfsbildbeschreibungen (VB1-VB5) erfolgt.

7. Verfahren nach einem der voranstehenden Ansprüche,
**dadurch gekennzeichnet, dass**
- das Prozessabbild (PB) der technischen Anlage (600) auf der Basis von einem Eingangszustandsdatensatz (EDS) erzeugt wird,
- die auf der Basis des Mustererkennungsverfahrens (103) gebildeten Zustandsdaten (ZD) mit den Daten des Eingangszustandsdatensatzes (EDS) verglichen werden und
- ein Warnsignal (WS) erzeugt wird, wenn die Zustandsdaten (ZD) von den Daten des Eingangszustandsdatensatzes (EDS) abweichen oder über ein vorgegebenes Maß voneinander abweichen.

8. Technische Anlage (600) mit einer Anzeigeeinrichtung (604), auf der ein Prozessabbild (PB) der technischen Anlage (600) anzeigbar ist,
**dadurch gekennzeichnet, dass**
die technische Anlage (600) eine Prozesszustandserkennungseinrichtung (100) aufweist, die derart ausgestaltet ist, dass sie
- Pixelinformationen des Prozessabbilds (PB) oder Pixelinformationen von einem oder mehreren aus dem Prozessabbild (PB) gewonnenen Hilfsbildern (HB1-HB5) einem Vektorisierungsverfahren (102) unter Bildung einer vektorbasierten Bildbeschreibung oder vektorbasierter Hilfsbildbeschreibungen (VB1-VB5) unterzieht und
- mit der vektorbasierten Bildbeschreibung oder den vektorbasierten Hilfsbildbeschreibungen (VB1-VB5) unter Heranziehung eines Mustererkennungsverfahrens (103) Zustandsdaten (ZD) erzeugt, die den Betriebszustand der technischen Anlage (600) oder von Anlagenkomponenten (K1-Kn) der Anlage (600) beschreiben.

9. Technische Anlage (600) nach Anspruch 8,
**dadurch gekennzeichnet, dass**
die technische Anlage (600) eine Eisenbahnanlage ist und auf der Anzeigeeinrichtung (604) ein eisenbahntechnisches Prozessabbild (PB), insbesondere ein den Signal- und/oder Weichen- und/oder Belegungszustand eines Gleisabschnitts der Eisenbahnanlage anzeigendes Gleisanlagenzustandsbild, angezeigt wird.

10. Technische Anlage (600) nach einem der voranstehenden Ansprüche 8 bis 9,
**dadurch gekennzeichnet, dass** die Prozesszustandserkennungseinrichtung (100) eine Recheneinrichtung (501) aufweist, die derart programmiert ist, dass sie ein Verfahren nach einem der voranstehenden Ansprüche 1 bis 7 ausführen kann.

11. Technische Anlage (600) nach einem der voranstehenden Ansprüche 8 bis 10,
**dadurch gekennzeichnet, dass** die Prozesszustandserkennungseinrichtung (100) einen Bestandteil eines Eisenbahnstellwerks bildet.

12. Technische Anlage (600) nach einem der voranstehenden Ansprüche 8 bis 10,
**dadurch gekennzeichnet, dass** die Prozesszustandserkennungseinrichtung (100) einen Bestandteil einer Führerstandsanzeige eines Schienenfahrzeugs bildet.

13. Technische Anlage (600) nach einem der voranstehenden Ansprüche 8 bis 12,
**dadurch gekennzeichnet, dass**
- die Anlage (600) eine erste Recheneinheit (601) aufweist, die das Prozessabbild (PB) der technischen Anlage (600) auf der Basis eines Eingangszustandsdatensatzes (EDS) erzeugt,
- die Anlage (600) eine zweite Recheneinheit (602) aufweist, die die Pixelinformationen des Prozessabbilds (PB) oder die Pixelinformationen von einem oder mehreren aus dem Prozessabbild (PB) gewonnenen Hilfsbildern (HB1-HB5) dem Vektorisierungsverfahren (102) unter Bildung der vektorbasierten Bildbeschreibung oder vektorbasierter Hilfsbildbeschreibungen (VB1-VB5) unterzieht und auf der Basis des Mustererkennungsverfahrens (103) die Zustandsdaten (ZD) bildet, und
- die Anlage (600) eine Vergleichseinrichtung (603) aufweist, die Daten des Eingangszustandsdatensatzes (EDS) mit den von der zweiten Recheneinheit gebildeten Zustandsdaten (ZD) vergleicht und ein Warnsignal (WS) erzeugt, wenn die Zustandsdaten (ZD) von den Daten des Eingangszustandsdatensatzes (EDS) abweichen oder über ein vorgegebenes Maß voneinander abweichen.

14. Prozesszustandserkennungseinrichtung (100) für eine technische Anlage (600) nach einem der voranstehenden Ansprüche 8 bis 13,
**dadurch gekennzeichnet, dass**
die Prozesszustandserkennungseinrichtung (100) eine Recheneinrichtung (501) aufweist, die derart programmiert ist, dass sie ein Verfahren nach einem der voranstehenden Ansprüche 1 bis 7 bei Ablauf eines Betriebsprogrammes (BP) in der Recheneinrichtung ausführt.

15. Prozesszustandserkennungseinrichtung (100) nach Anspruch 14,
**dadurch gekennzeichnet, dass**
die Prozesszustandserkennungseinrichtung (100) einen mit der Recheneinrichtung (501) in Verbindung stehenden Speicher (502) aufweist, in dem das Betriebsprogramm (BP) gespeichert ist, das bei Ausführung durch die Recheneinrichtung (501) die Arbeitsweise der Recheneinrichtung (501) sowie damit insgesamt die Arbeitsweise der Prozesszustandserkennungseinrichtung (100) festlegt.

## Claims

1. Method for operating a technical system (600), which comprises a display device (604), wherein, in the method, a process image (PB) of the technical system (600) is displayed on the display device (604),
**characterised in that**
- pixel information of the process image (PB) or pixel information of one or more auxiliary images (HB1-HB5) obtained from the process image (PB) is subjected to a vectorisation process (102) with the formation of a vector-based image description or vector-based auxiliary image descriptions (VB1-VB5), and
- the vector-based image description or the vector-based auxiliary image descriptions (VB1-VB5) are each subjected to a pattern detection process (103) with the formation of status data (ZD), which describes the operating state of the technical system (600) or of system components (K1-Kn) of the technical system (600).

2. Method according to claim 1,
**characterised in that**
- the technical system (600) is a railway system and
- a railway process image (PB) of the railway system is displayed on the display device (604), in particular a track system status image indicating the signal and/or points and/or occupancy status of a track section of the railway system.

3. Method according to one of the preceding claims,
**characterised in that**
at least one auxiliary image (HB1-HB5) is generated **in that**
- all those pixels of the process image (PB) that have a colour individually assigned to the auxiliary image (HB1-HB5) are assigned a predetermined first auxiliary pixel colour and
- all other pixels of the process image (PB) are assigned a second auxiliary pixel colour, different from the first auxiliary pixel colour.

4. Method according to claim 3,
**characterised in that**
- a colour set comprising at least two colours is specified and an auxiliary image (HB1-HB5) is created for each of the colours of the colour set,
- by assigning the first auxiliary pixel colour to all those pixels of the process image (PB) that have the colour individually assigned to the respective auxiliary image (HB1-HB5) and the second auxiliary pixel colour to all other pixels of the process image (PB).

5. Method according to one of the preceding claims 2 to 4,
**characterised in that**
the first auxiliary pixel colour is black and the second auxiliary pixel colour is white and the auxiliary image or images (HB1-HB5) are black and white images.

6. Method according to one of the preceding claims 2 to 4,
**characterised in that**
- for each colour of the colour set and for each auxiliary image (HB1-HB5) a vector-based auxiliary image description (VB1-VB5) is generated and
- the formation of the status data (ZD), which describes the operating status of the technical system (600) or of system components (K1-Kn) of the system (600), takes place on the basis of the vector-based auxiliary image descriptions (VB1-VB5).

7. Method according to one of the preceding claims,
**characterised in that**
- the process image (PB) of the technical system (600) is generated on the basis of an input status data set (EDS),
- the status data (ZD) formed on the basis of the pattern detection method (103) is compared with the data of the input status data set (EDS) and
- a warning signal (WS) is generated when the status data (ZD) deviates from the data of the input status data set (EDS) or when status data sets deviate from one another above a specified amount.

8. Technical system (600) having a display device (604), on which a process image (PB) of the technical system (600) can be displayed,
**characterised in that**
the technical system (600) has a process state detection device (100) which is configured such that it
- submits pixel information of the process image (PB) or pixel information of one or more auxiliary images (HB1-HB5) obtained from the process image (PB) to a vectorisation process (102) with the formation of a vector-based image description or vector-based auxiliary image descriptions (VB1-VB5) and
- with the vector-based image description or the vector-based auxiliary image descriptions (VB1-VB5) using a pattern detection process (103) generates status data (ZD) that describes the operating status of the technical system (600) or of system components (K1-Kn) of the system (600).

9. Technical system (600) according to claim 8,
**characterised in that**
the technical system (600) is a railway system and a railway process image (PB), in particular a track system status image showing the signal and/or points and/or occupancy status of a track section of the railway system, is displayed on the display device (604).

10. Technical system (600) according to one of the preceding claims 8 to 9,
**characterised in that**
the process state detection device (100) has a computing device (501) which is programmed such that it can carry out a method according to one of the preceding claims 1 to 7.

11. Technical system (600) according to one of the preceding claims 8 to 10,
**characterised in that**
the process state detection device (100) forms part of a railway signal box.

12. Technical system (600) according to one of the preceding claims 8 to 10,
**characterised in that**
the process state detection device (100) forms part of a driver's cab display of a rail vehicle.

13. Technical system (600) according to one of the preceding claims 8 to 12,
**characterised in that**
- the system (600) has a first computing unit (601) which generates the process image (PB) of the technical system (600) on the basis of an input status data set (EDS),
- the system (600) has a second arithmetic unit (602) which feeds the pixel information of the process image (PB) or the pixel information of one or more auxiliary images (HB1-HB5) obtained from the process image (PB) to the vectorisation process (102) with the formation of the vector-based image description or vector-based auxiliary image descriptions (VB1-VB5) and based on the pattern detection method (103) forms the status data (ZD), and
- the system (600) has a comparison device (603) which compares data of the input status data set (EDS) with the status data (ZD) formed by the second arithmetic unit and generates a warning signal (WS) when the status data (ZD) deviates from the data of the input status data set (EDS) or when status data sets deviate from one another above a specified amount.

14. Process state detection device (100) for a technical system (600) according to one of the preceding claims 8 to 13,
**characterised in that**
the process state detection device (100) has a computing device (501) which is programmed such that it can carry out a method according to one of the preceding claims 1 to 7 when an operating program (BP) is run in the computing device.

15. Process state detection device (100) according to claim 14,
**characterised in that**
the process state detection device (100) has a memory (502) which is connected to the computing device (501) and in which the operating program (BP) is stored which, when executed by the computing device (501), defines the mode of operation of the computing device (501) and thus overall defines the mode of operation of the process state detection device (100).

## Revendications

1. Procédé pour faire fonctionner une installation (600) technique, qui comprend un dispositif (604) d'affichage, dans lequel, dans le procédé, on affiche, sur le dispositif (604) d'affichage, une reproduction (PB) de processus de l'installation (600) technique,
**caractérisé en ce que**
- on soumet des informations de pixels de la reproduction (PB) de processus ou des informations de pixels d'une ou de plusieurs images (HB1 à HB5) auxiliaires obtenues à partir de la reproduction (PB) de processus à un procédé (102) de vectorisation, en formant une description d'images vectorielles ou des descriptions (VB1 à VB5) d'images auxiliaires vectorielles, et
- on soumet la description d'images vectorielles ou les descriptions (VB1 à VB5) d'images auxiliaires vectorielles, respectivement, à un procédé (103) de reconnaissance de modèle, en formant des données (ZD) d'état, qui décrivent l'état de fonctionnement de l'installation (600) technique ou de composants (K1 à Kn) de l'installation (600) technique.

2. Procédé suivant la revendication 1,
**caractérisé en ce que**
- l'installation (600) technique est une installation de chemin de fer, et
- on affiche, sur le dispositif (604) d'affichage, une reproduction (PB) de processus de la technique ferroviaire de l'installation de chemin de fer, notamment une image d'état de l'installation de voie indiquant l'état de signal et/ou d'aiguillage et/ou d'occupation d'un tronçon de voie de l'installation de voie ferrée.

3. Procédé suivant l'une des revendications précédentes,
**caractérisé en ce que**
on produit au moins une image (HB1 à HB5) auxiliaire,
- en associant une première couleur de pixel auxiliaire donnée à l'avance à tous les pixels de la reproduction (PB) de processus, qui ont une couleur associée individuellement à l'image (HB1 à HB5) auxiliaire, et
- en associant, à tous les autres pixels de la reproduction (PB) de processus, une deuxième couleur de pixel auxiliaire différente de la première couleur de pixel auxiliaire.

4. Procédé suivant la revendication 3,
**caractérisé en ce que**
- on prescrit un jeu de couleurs ayant au moins deux couleurs et on établit, pour chacune des couleurs du jeu de couleurs, respectivement, une image (HB1 à HB5) auxiliaire,
- en associant la première couleur de pixel auxiliaire à tous les pixels de la reproduction (PB) de processus, qui ont la couleur associée individuellement à l'image (HB1, HB5) auxiliaire respective et la deuxième couleur de pixel auxiliaire à tous les autres pixels de la reproduction (PB) de processus.

5. Procédé suivant l'une des revendications 2 à 4 précédentes,
**caractérisé en ce que**
la première couleur de pixel auxiliaire est noire et la deuxième couleur de pixel auxiliaire est blanche et **en ce que** la ou les images (HB1 à HB5) auxiliaires sont des images en noir et blanc.

6. Procédé suivant l'une des revendications 2 à 4 précédentes,
**caractérisé en ce que**
- on produit, pour chaque couleur du jeu de couleurs et pour chaque image (HB1 à HB5) auxiliaire, respectivement, une description (VB1 à VB5) d'images auxiliaires vectorielles, et
- la formation des données (ZD) d'état, qui décrivent l'état de fonctionnement de l'installation (600) technique ou de composants (K1 à Kn) de l'installation (600), est effectuée sur la base des descriptions (VB1 à VB5) d'images auxiliaires vectorielles.

7. Procédé suivant l'une des revendications précédentes,
**caractérisé en ce que**
- on produit la reproduction (PB) de processus de l'installation (600) technique sur la base d'un jeu (EDS) de données d'état d'entrée,
- on compare les données (ZD) d'état, formées sur la base du procédé (103) de reconnaissance de modèle, aux données du jeu (EDS) de données d'état d'entrée, et
- on produit un signal (WS) d'alerte, si les données (ZD) d'état s'écartent des données du jeu (EDS) de données d'état d'entrée ou s'en écartent dans une mesure donnée à l'avance.

8. Installation (600) technique, comprenant un dispositif (604) d'affichage, sur lequel une reproduction (PB) de processus de l'installation (600) technique peut être affichée,
**caractérisée en ce que**
l'installation (600) technique a un dispositif (100) de reconnaissance d'état du processus, qui est conformé de manière
- à soumettre des informations de pixel de la reproduction (PB) du processus ou des informations de pixel d'une ou de plusieurs images (HB1 à HB5) auxiliaires obtenues à partir de la reproduction de processus à un procédé (102) de vectorisation avec formation d'une description d'images vectorielles ou de description (VB1 à VB5) d'images auxiliaires vectorielles, et
- à produire, par la description d'images vectorielles ou les descriptions (VB1 à VB5) d'images auxiliaires vectorielles, en tirant parti d'un procédé (103) de reconnaissance de modèle des données (ZD) d'état, qui décrivent l'état de fonctionnement de l'installation (600) technique ou de composants (K1 à Kn) de l'installation (600).

9. Installation (600) technique suivant la revendication 8,
**caractérisée en ce que**
l'installation (600) technique est une installation de chemin de fer et on affiche, sur le dispositif (604) d'affichage, une reproduction (PB) de processus de la technique ferroviaire de l'installation de chemin de fer, notamment une image d'état de l'installation de voie indiquant l'état de signal et/ou d'aiguillage et/ou d'occupation d'un tronçon de voie de l'installation de voie ferrée.

10. Installation (600) technique suivant l'une des revendications 8 à 9 précédentes,
**caractérisée en ce que**
le dispositif (100) de reconnaissance d'état de processus a un dispositif (501) informatique programmé de manière à pouvoir exécuter un procédé suivant l'une des revendications 1 à 7 précédentes.

11. Installation (600) technique suivant l'une des revendications 8 à 10 précédentes,
**caractérisée en ce que**
le dispositif (100) de reconnaissance d'état de processus forme une partie constitutive d'un poste d'aiguillage de voie ferrée.

12. Installation (600) technique suivant l'une des revendications 8 à 10 précédentes,
**caractérisée en ce que**
le dispositif (100) de reconnaissance d'état de processus forme une partie constitutive d'un affichage d'état pour le conducteur d'un véhicule ferroviaire.

13. Installation (600) technique suivant l'une des revendications 8 à 12 précédentes,
**caractérisée en ce que**
- l'installation (600) a une première unité (601) informatique, qui produit la reproduction (PB) de processus de l'installation (600) technique sur la base d'un ensemble (EDS) de données d'état d'entrée,
- l'installation (600) a une deuxième unité (602) informatique, qui soumet les informations de pixel de la reproduction (PB) de processus ou les informations de pixel d'une ou de plusieurs images (HB1 à HB5) auxiliaires obtenues à partir de la reproduction (PB) de processus à un procédé (102) de vectorisation, en formant la description d'image vectorielle ou des descriptions (VB1 à VB5) d'image auxiliaire vectorielle et forme les données (ZD) d'état sur la base du procédé (103) de reconnaissance de modèle, et
- l'installation (600) a un dispositif (603) de comparaison, qui compare des données de l'ensemble (EDS) de données d'état d'entrée aux données (ZD) d'état formées par la deuxième unité informatique et produit un signal (WS) d'alerte, si les données (ZD) d'état s'écartent des données de l'ensemble (EDS) de données d'état d'entrée ou s'en écartent dans une mesure donnée à l'avance.

14. Dispositif (100) de reconnaissance d'état de processus pour une installation (600) technique suivant l'une des revendications 8 à 13 précédentes,
**caractérisé en ce que**
le dispositif (100) de reconnaissance d'état de processus a un dispositif (501) informatique programmé de manière à exécuter un procédé suivant l'une des revendications 1 à 7 précédentes, lors du déroulement d'un programme (BP) de fonctionnement dans le dispositif informatique.

15. Dispositif (100) de reconnaissance d'état de processus suivant la revendication 14,
**caractérisé en ce que**
le dispositif (100) de reconnaissance d'état de processus a une mémoire (502), qui est en liaison avec le dispositif (501) informatique et dans laquelle est mis en mémoire le programme (BP) de fonctionnement, qui, lors de la réalisation par le dispositif (501) informatique, fixe le mode de travail du dispositif (501) informatique, ainsi que, de cette manière, dans l'ensemble le mode de travail du dispositif (100) de reconnaissance d'état de processus.
